Europäisches Patentamt

European Patent Office

Office européen des brevets

(11) Publication number: **0 086 518**
A2

# (12) EUROPEAN PATENT APPLICATION

(21) Application number: **83200142.4**

(22) Date of filing: **27.01.83**

(51) Int. Cl.³: **H 04 Q 3/52**

(30) Priority: **16.02.82 NL 8200579**

(43) Date of publication of application: **24.08.83**
Bulletin 83/34

(84) Designated Contracting States: **BE DE FR GB IT SE**

(71) Applicant: **N.V. Philips' Gloeilampenfabrieken,**
**Groenewoudseweg 1, NL-5621 BA Eindhoven (NL)**

(72) Inventor: **Koomen, Cornelis Jan, c/o INT.**
**OCTROOIBUREAU B.V. Prof. Holstlaan 6, NL-5656 AA**
**Eindhoven (NL)**

(74) Representative: **Hanneman, Henri Willem Andries Maria**
**et al, INTERNATIONAAL OCTROOIBUREAU B.V. Prof.**
**Holstlaan 6, NL-5656 AA Eindhoven (NL)**

(54) **A binary switching element and a selector stage, a selector and selector system comprising binary switching elements.**

(57) Contemporary communication networks, telephone exchanges in particular, are usually equipped with a comprehensive central control. A result thereof is that they are very complex. The invention provides a communication network having a high degree of distributed control and processing by providing a binary switching element from which selector stages, selectors and selector systems are assembled, which are employed in the whole network. The binary switching element (10) comprises means (15) which connect an input (11) to both a zero-output (12) and a not-output (14) and means (15') connecting the input (11) to both a one-output (13) and the not-output (14). One of the outputs (12, 13, 14) is activated depending on the logic value of the binary input signal and the presetting of the means (15, 15'). An arbitrary large, flexible, simple and reliable communication network can be assembled by arranging these binary switching elements in series and/or in parallel.

"A binary switching element and a selector stage,
a selector and selector system comprising binary
switching elements".


The invention relates to a binary switching element. The invention also relates to a selector stage, a selector and selector system comprising such binary switching elements.

Such a selector is disclosed in United States Patent 638,249. The selector is a step-by-step driven switch, which can move in 10 steps in the vertical direction and can rotate, also in 10 steps, in the horizontal direction and establish a connection between the input and one contact of the contact bank having 10 x 10 contacts. This selector is usually designated two-motion switch. The first automatic telephone exchanges were equipped with this type of selector and were called Strowger exchanges after the inventor of the selector. Apart from the fact that the use of these selectors made it at that time possible to carry on telephone calls without the intermediary of an operator, the advantage of the exchanges has remained in the fact that thanks to the decentralized structure a relatively high reliability can be obtained: disturbances remain limited as much as possible to their immediate environment ("graceful degradiation"). A disadvantage is that the control portion and the speech path portion form one whole, which resulted in a low degree of flexibility, inter alia as regards the network structure and the control. Further developments show that by adding a register to the selector a first step was made towards centralization of the control! namely, the register is used for a brief period of time (namely for the period of time needed to establish the connection) and the register can thereafter be employed for one or several other selectors

Further centralization was accomplished by means of the exchanges commonly referred to as cross-bar system

0086518
20.10.1982

exchanges in which centralized adjustment elements
("markers") are provided which change the dialling
information and make it suitable for energizing the
cross-bars In contrast with the Strowger exchanges where the
selectors are directly driven by the dialled numbers (direct
control), in the cross-bar exchange the dialling information
is first taken up by a marker before the selector is set
("indirect control").

A very high degree of centralization was
achieved with the exchanges which are commonly referred to
as stored program controlled exchanges. Virtually the whole
control is effected centrally as a result of which the
speech path network and the control form substantially
distinct portions. These telephony networks have the drawbacks that they are very complex which is *inter alia*
reflected by their capacity (number of lines), number of
components, number of people involved in their design,
design time and the substantially unlimited technical possibilities determined by the programs.

It is an object of the invention to provide a
selector stage, selector and selector system with which a
communication network having a high degree of flexibility
and reliability is realized and which is applicable in a
large variety of network structures;

with which the design complexity is reduced;

with which a change in, for example, number or
place of terminal or subscriber is processed in a simple
way;

and with which an alternative routing is realized in a simple way in the event of congestion, interferen-
ces or breakdown of connection paths or nodes.

According to the invention, the binary switching element is characterized in that the binary switching
element has an input for binary input signals, a first
output, the zero-output, a second output, the one-output,
and a third output, the not-output, that the binary switching
element comprises means which are connected to the input, to the zero-output and to the not-output for activating
either the zero-output or the not-output if the binary
input signal has a first logic value, that the binary
switching element further comprises means which are connected to the input, to the one-output and to the not-output
for activating either the one-output or the not-output if
the binary input signal has a second logic value, and that
the two means are preset for activating the desired output.

The use of the high degree of distributed control
and processing obtained  in this way results in a comparatively simple, flexible and reliable communication network,
Such communication networks are particularly suitable for
use in public and private telephony systems as well as
in telex networks and networks connecting computers.

With the binary switching elements selector
stages, selectors and selector systems can be assembled
according to the invention to form more sophisticated
switching functions. Embodiments of the invention and their
advantages will now be further described with reference to
the accompanying drawings, in which corresponding elements
are given the same reference symbols. Herein:

Fig. 1a shows a binary switching element in
accordance with the invention;

Fig. 1b is a schematical representation of this
binary switching element of Fig. 1a;

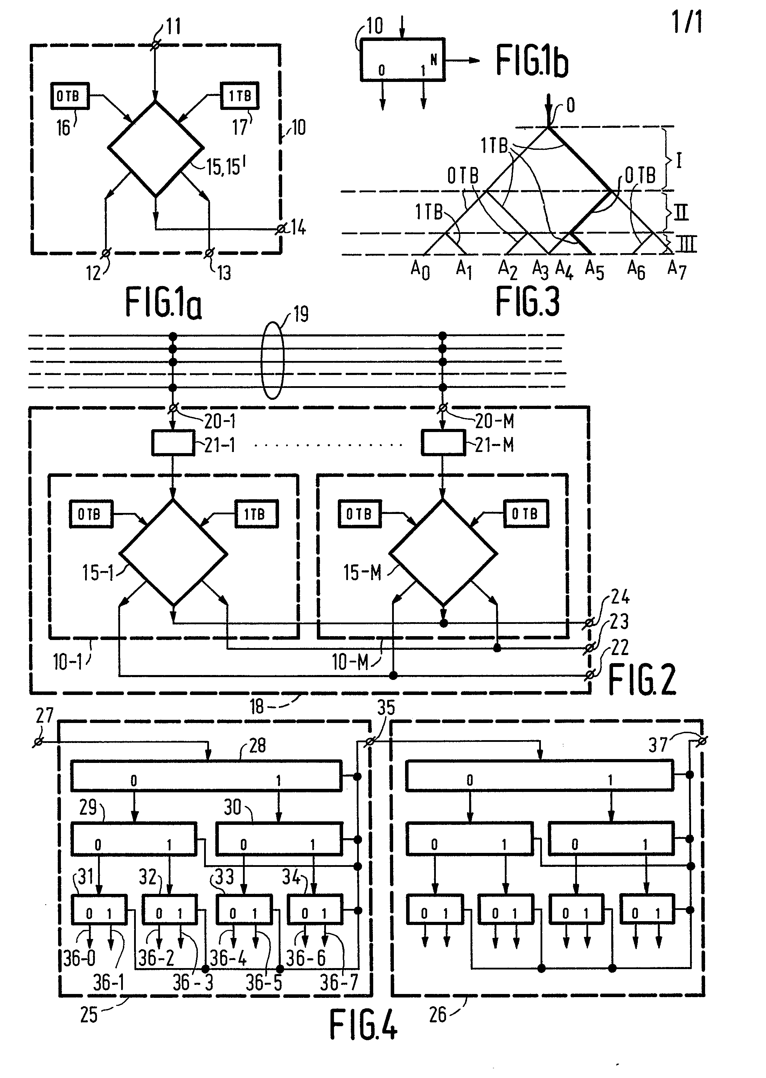

Fig. 2 shows a selector stage in accordance with
the invention comprising binary switching elements as shown
in Fig. 1a;

Fig. 3 shows an addressing tree showing the
pattern in which binary switching elements of Fig. 1a
are arranged;

Fig. 4 shows a selector system in accordance
with the invention, comprising binary switching elements
as shown in Fig. 1a and selector stages as shown in Fig. 2.

A binary switching element 10, shown in Fig. 1,
has  an input 11, to which binary signals are applied and
three outputs 12, 13 and 14. The binary switching element

0086518
20.10.1982

10 comprises means 15 which are coupled to input 11 and to output 12 and 14 for activating output 12, designated zero output hereinafter, if the logic value of the actual bit applied to input 11, is a logic "0" and logic means 16 designated "0-sign bit" (OTB) hereinafter has been set. If a logic "0" is applied to input 11, but the OTB has not been set, then output 14, designated not-output hereinafter, is activated. The binary switching element 10 further comprises means 15' which are coupled to input 11 and to outputs 13 and 14 for activating output 13, designated one-output hereinafter, if a logic value of the actual bit applied to the input 11 is a logic"1" and logic means 17, designated "1" sign-bit" (1TB) hereinafter, has been set. If a logic "1" is applied to input 11, but the 1TB has not been set then not-output 14 is activated. Table I shows the truth table relating to the binary switching element 15. The symbol "x" indicates that the logic value of the relevant element is not important("don't care").

## TABLE I

| actual bit | OTB | 1TB | activated output |
|------------|-----|-----|------------------|
| 0 | 0 | X | not-output |
| 0 | 1 | X | zero-output |
| 1 | X | 0 | not-output |
| 1 | X | 1 | one-output |

The structure of the binary switching element 10 is not shown in further detail since it can be derived directly from the truth table by a person skilled in the art of designing digital circuitry. Several embodiments are possible, both in the form of "wired logic" and in "software".

With the binary switching element shown in Fig. 1 it is possible to assemble a selector stage as shown in Fig. 2. The selector stage 18 is connected to a bundle of

0086518

incoming lines 19. Each line of the bundle 19 is connected to an individual input 20-1, 20-2, ... 20-M of the selector stage 18. Connection requests are transmitted to the selector stage 18 over the lines of the bundle 19. These connection requests contain the desired destination address $\underline{d}$, for example in binary form. A destination address may be the subscriber number of the person called, to which, possibly, the subscriber's exchange code (area code) and telephone number may be added.

The selector stage 18 comprises M arbitration circuits 21-1, ... 21-M which are arranged in series with the subsequent binary switching elements 10-1 ... 10-M; an input of an arbitration circuit 21-i (i=1, ... M) is connected to the input 20-i of the selector stage and an output of arbitration circuit 21-i is connected to the input of binary switching element 10-i. The connection requests present on the bundle of incoming lines 19 are consequently applied in parallel to the arbitration circuit 20-1 ... 20-M. The arbitration circuits 21, which are known per se, have the following function. If a destination address is offered on one of the lines of the incoming bundle 19 then only one of the arbitration circuits 20-i will forward destination address $\underline{d}$ on to the binary switching element 10-i. The relevant binary switching element will then transfer the destination address to one of the outputs 22, 23 and 24 selecting one of the bits of the destination address in the manner described above with reference to Fig. 1.

Thus, the selector stage 10 selects an output 22, 23 or 24 on the basis of the logic value of one bit in the destination address. As a destination address usually comprises several bits it will be necessary to extend the provisions for that event. This is effected by arranging binary switching elements in accordance with an addressing tree as shown in Fig. 3. The addressing tree has three layers and is suitable for eight ($2^3$) destination addresses, for example subscriber's $A_0$, $A_1$, $A_2$ ... $A_7$. A thick solid line in the addressing tree of Fig. 3 indicates which sign

0086518
20.10.1982

bits have been set while a thin line indicates that the
sign bit has not been set (the 1-sign bit corresponds to a
branch extending to the right, the 0-sign bit corresponds to
a branch going to the left in the Figure. The first layer
comprises one binary switching element, the second layer
comprises two binary switching elements and the third layer
comprises four binary switching elements. A destination
address applied to origin 0 is decoded by the addressing
tree. By way of example, Fig. 3 shows which path is followed
if the destination address "5" (binary code: 101) is made
accessible from 0 by "setting" the appropriate sign bits.
Further destinations become accessible from 0 by setting
the appropriate sign bits. If in an addressing tree
all paths were shown as thick solid lines, all eight desti-
nation addresses $A_0$-$A_7$ would be accessible from 0. Generally, an addressing tree may have more or fewer layers than
the three layers shown. If a destination address which is
not located in the "service area" of 0 is applied to the
input 0 of the addressing tree this address is discharged
_via_ the not-output (not shown in Fig. 3) of the binary switching element in layer I. This also happens at the
remaining binary switching element in the other layers.
It is advantageous to give the 0 and 1-sign bits such a
structure that they are programmable, which achieves in a
simple way the mobility of subscriber terminals or nodes
etc. It is not necessary for the addressing tree to be
complete; it is possible that some branches or even portions
of the tree, consisting of several branches, are absent, for
example because the network realized therewith is not yet
wholly complete.

A selector assembled from binary switching
elements which are arranged in an addressing tree according
to Fig. 3 is shown in Fig. 4. The selector 25 and the
selector 26, which is structured in accordance with the
same principle, each comprise a three-layer addressing tree,
so that it is possible to determine a maximum of eight
destination addresses with each selector. The destination addresses are applied to an input 27 of the selector 25.
Input 27 is connected to the input of the binary switching
element 28. The first bit of a destination address
determines in conjunction with the setting of the binary
switching element 28 (in other words the value of the OTB
and/or the 1TB) whether the destination address is transferred to the zero-output, to the one-output or to the not-
output of the binary switching element 28. A further switching element 29 is connected to the zero-output of the
binary switching element 28, and a further switching element
30 is connected to the one-output, these switching elements
both being provided in the second layer. The zero-output of
binary switching element 29 is connected to an input of a
switching element 31 provided in the third layer of
selector 25. In that layer there are, in addition, the
binary switching elements 32, 33 and 34. The not-outputs of
the $7(2^n - 1$, wherein n = 3 layers) binary switching elements 28-34 are connected to an output 35 of the selector
25. Consequently, the selector 25 detects whether and, if
so, which of the applied destination addresses is located
in its "service area" and transfers the destination address
to the output 36-i (i=0,...7) corresponding to that
destination address. The destination addresses which are
not located in the service area of selector 25 are transferred to output 35. The input of a further selector 26 is
connected to the output 35. Selector 26 operates in exactly
the same way as selector 25. It will be obvious that
selector 26 may consist of a larger or smaller number of
layers. One or several selectors may be connected to the
output 37 of selector 26. Ultimately there will be a last
selector which in principle may be formed from binary
switching elements which need not have not-outputs. It is
not necessary for the selectors to have the same number of
layers (K) as there are destination address bits (N). It is
namely possible that a selector effects a pre-selection on a
group of bits.

       Instead of the single binary switching elements

0086518

a selector stage (18 in Fig. 2) formed from several, parallel binary switching elements may be employed in the selector shown in Fig. 4. (The connections between the selector stages and the connections between input 27 and selector stage 28 and output 35 and the selector stages connected thereto may alternatively all be a multiple connection, that is to say they may be formed by a bundle of connections such as bundle 19 in Fig. 2). It is advantageous to choose the number of binary switching elements comprised in a stage such that in consecutive layers this number always differs by a factor of 2. Then the first layer comprises twice as many binary switching elements as the second layer, which itself comprises twice as many switching elements as the third layer etc. At the selector 25 in Fig. 4 this is schematically shown by the fact that the binary switching element 28 in the first layer is twice as wide as the binary switching elements 29 and 30 in the second layer, these last-mentioned binary switching elements being twice as wide as the binary switching elements 31, 32, 33 and 34 in the third layer. This allows the required processing speed of the binary switching elements in all layers to be choosen to be equal.

In a communication network a distinction can be made between a control network and an information network. In the control network connections are, for example, made and broken, while the actual communication, the transfer of the information occurs in the information network. The selector stages, selectors and selector systems form part of the control network. They are employed to establish from selector to selector a path from caller terminal to the terminal called. In the conventional Strowger exchanges with in-band signalling (a signalling channel located within the frequency band used for speech) the control network coincides physically predominantly with the information network. The path from caller terminal to the terminal called which was established in the signalling phase is thereafter employed as speech path connection (though with an adapted frequency band). This is equally possible by means of a communication network comprising the selector stages, selector and selector systems in accordance with the invention. The path established in each node from input to free output serves in the information phase as a portion of the information connection (so at telephone exchanges as a portion of the speech path connection).

It is equally possible to construct the control network and the information network strictly separate. To a path or a portion of the path, as the case may be, in the control network there then corresponds a connection to the information network. For telephone exchanges this means that the speech path network is physically a different network than the control network. The switching system in the speech path network (generally the information network) may then be arranged in accordance with one of the known types: space-division, frequency-division or time division multiplex. In a switching system with spatial distribution the coordinate switch(es) determined by the address of the free output in the speech path network is (are) closed (for example by decoding the address); in a switching system with time-division multiplex a speech path is cyclically made available during a short period of time under the control of a connection memory in which the information for opening and closing in the correct manner (at the correct instant ) the desired connection ports is stored, which information is determined from the address of the free output; in a switching system with frequency-division multiplex a speech channel is created by making available a specific frequency band, determined by the address from the free output.

1.          A binary switching element, characterized in
that the binary switching element has: an input for binary
input signals, a first output, the zero-output, a second
output, the one-output, and a third output, the not-output,
that the binary switching element comprises means which are
connected to the input, to the zero-output and to the not-
output for activating either the zero-output or the not-
output if the binary input signal has a first logic value,
that the binary switching element further comprises means
connected to the input, to the one-output and to the not-
output for activating either the one-output or the not-
output if the binary input signal has a second logic value,
and that the two means are preset for activating the desired
output.

2.          A binary switching element as claimed in Claim
1, characterized in that the two means are programmable and
re-programmable.

3.          A selector stage comprising binary switching
elements as claimed in Claim 1 or 2, characterized in that
the selector stage comprises M $(M \geqslant 2)$ parallel binary
switching elements, M arbitration circuits, an input, a
zero-output, a one-output and a not-output, that each
arbitration circuit has an input for binary input signals
which input is connected to the input of the selector stage
and that each arbitration circuit has an output which is
connected to the input of an associated binary switching
element, that the zero outputs of each binary switching
element are interconnected and connected to the zero output
of the selector stage, that the one-outputs of each binary
switching element are interconnected and connected to the
one-output of the selector stage, that the not-outputs of
each binary switching element are interconnected and connected to the not-output of the selector stage, the binary input signals containing destination addresses on which the arbitration circuits mutually arbitrate which one of them will transfer the destination address to the associated binary switching element.

4.          A selector comprising binary switching elements as claimed in Claim 1 or 2, characterized in that the binary switching elements are arranged in a tree structure, each branch being split into two further branches, that a first binary switching element is arranged on a first level, the input of the first binary switching element being the input of the selector, that the input signals applied to the in put of the selector are binary destination addresses which addresses contain N bits, a first bit of the binary destination address activating the binary switching element on the first level, that the zero-output of the binary switching element on the first level is connected to a binary switching element which is arranged on a second level and that the one-output of the binary switching element on the first level is connected to an input of a further binary switching element which is also on the second level, that the second bit of the binary destination address activates a switching element on the second level, that the zero-output and the one-output of the $2 \exp(i-2)$ binary switching elements ($i=2, 3 \ldots K, K \leqslant N$) on a $(i-1)^{th}$ level are each connected to an input of further binary switching elements, the last-mentioned switching elements being arranged on the $i^{th}$ level, the $i^{th}$ level of the destination address activating a binary switching element on the $i^{th}$ level, that the zero-output and one-output of the binary switching elements on the $K^{th}$ level indicate the address of a node to which the destination address is conveyed and that the not-outputs of the binary switching elements of all levels are connected to an output of the selector.

5.          A selector comprising selector stages as claimed in Claim 3, characterized in that the selector stages are arranged in a tree structure, branches being split into two further branches, that a first  selector stage is arranged on a first level, the input of the first selector stage being the input of the selector, that the input signals applied to the input of the selector are binary destination addresses each comprising N bits, a first bit of the binary destination address activating the selector stage on the first level, that the zero-output of the selector stage on the first level is connected to an input of a selector stage which is arranged on a second level and the one-output of the selector stage on the first level is connected to an input of a further selector stage which is also on the second level, that the second bit of the binary destination address activates a switching element on the second level, that the zero-output and the one-output of the $2 \exp(i-2)$ selector stages $(i=2,3, \ldots K, K \leqslant N)$ on an $(i-1)^{th}$ level are each connected to an input of further selector stages, these last-mentioned selector stages being arranged on the $i^{th}$ level, the $i^{th}$ bit of the destination address activating a selector stage on the $i^{th}$ level, that the zero-outputs and one-outputs of the selector stages on the $K^{th}$ level indicate the address of a node to which the destination addresses is conveyed and that the not-outputs of the selector stages of all levels are connected to an output of the selector.

6.          A selector as claimed in Claim 5, characterized in that each of the selector stages on level i $(i=1,2,\ldots K, K \leqslant N)$ comprises twice as many binary switching elements as each of the selector stages on level $(i+1)$.

7.          A selector system comprising selectors as claimed in any of the Claims 4, 5 and 6, characterized in that the selector system comprises at least two consecutive selectors, the not-outputs of a selector being connected to the input of the subsequent selector.

FIG.1a

FIG.1b

FIG.3

FIG.2

FIG.4